# EUROPEAN PATENT SPECIFICATION

(11) **EP 2 485 317 B1**
(45) Date of publication and mention of the grant of the patent: **22.04.2020**
(21) Application number: 10818584.4
(22) Date of filing: 18.03.2010
(51) Int. Cl.: H01M 4/38, H01M 4/485, H01M 4/58, H01M 10/054, H01M 10/0566, H01M 10/39

(54) **BATTERY AND ENERGY SYSTEM**
BATTERIE- UND STROMSYSTEM
BATTERIE ET FILIERE ENERGETIQUE

(30) Priority: 28.09.2009 JP 2009222854
(43) Date of publication of application: 08.08.2012
(73) Proprietor: Sumitomo Electric Industries, Ltd., Chuo-ku Osaka-shi Osaka 541-0041 (JP); Kyoto University, Sakyo-ku Kyoto-shi Kyoto 606-8501 (JP)
(72) Inventor: FUKUNAGA, Atsushi, Osaka-shi Osaka 554-0024 (JP); INAZAWA, Shinji, Osaka-shi Osaka 554-0024 (JP); MAJIMA, Masatoshi, Osaka-shi Osaka 554-0024 (JP); NITTA, Koji, Osaka-shi Osaka 554-0024 (JP); SAKAI, Shoichiro, Osaka-shi Osaka 554-0024 (JP); HAGIWARA, Rika, Kyoto-shi Kyoto 606-8501 (JP); NOHIRA, Toshiyuki, Kyoto-shi Kyoto 606-8501 (JP); ISHIBASHI, Tatsuya, Kyoto-shi Kyoto 606-8501 (JP)
(74) Representative: Boult Wade Tennant LLP
(86) International application number: PCT/JP2010/054640
(87) International publication number: WO 2011/036907

(56) References cited:
- EP-A1- 1 862 452
- EP-A1- 1 968 141
- WO-A1-2006/101141
- JP-A- 2000 223 148
- JP-A- 2008 243 646
- JP-A- 2009 067 644
- US-A- 4 003 753
- US-A- 5 168 020
- KUBOTA K ET AL: "Novel inorganic ionic liquids possessing low melting temperatures and wide electrochemical windows: Binary mixtures of alkali bis(fluorosulfonyl)amides", ELECTROCHEMISTRY COMMUNICATIONS, ELSEVIER, AMSTERDAM, NL, vol. 10, no. 12, 1 December 2008 (2008-12-01), pages 1886-1888, XP025679958, ISSN: 1388-2481, DOI: 10.1016/J.ELECOM.2008.10.001 [retrieved on 2008-11-19]
- NISHIJIMA M ET AL: "Cathode properties of metal trifluorides in Li and Na secondary batteries", JOURNAL OF POWER SOURCES, ELSEVIER SA, CH, vol. 190, no. 2, 15 May 2009 (2009-05-15), pages 558-562, XP026023344, ISSN: 0378-7753, DOI: 10.1016/J.JPOWSOUR.2009.01.051 [retrieved on 2009-01-30]
- MATSUMOTO HAJIME ET AL: "Low melting and electrochemically stable ionic liquids based on asymmetric fluorosulfonyl( trifluoromethylsulfonyl ) amide", CHEMISTRY LETTERS, CHEMICAL SOCIETY OF JAPAN, vol. 37, no. 10, 1 January 2008 (2008-01-01), pages 1020-1021, XP008161769, ISSN: 0366-7022, DOI: 10.1246/CL.2008.1018 [retrieved on 2008-08-30]
- TATSUYA ISHIBASHI ET AL.: 'NaTFSA-CsTFSA 2-Genkei Yoyuen o Mochiita Chuteion Sado Natrium Niji Denchi' BATTERY SYMPOSIUM IN JAPAN KOEN YOSHISHU vol. 50, 30 November 2009, page 234, XP008150085
- TATSUYA ISHIBASHI ET AL.: 'NaTFSA-CsTFSA 2-Genkei Yoyuen o Mochiita Na/NaCrO2 Denchi' THE ELECTROCHEMICAL SOCIETY OF JAPAN TAIKAI KOEN YOSHISHU vol. 76, 29 March 2009, page 377, XP008149711
- TATSUYA ISHIBASHI ET AL.: 'NaTFSA-CsTFSA 2-Genkei Yoyuen no Bussei to Na/NaCr02 Denchi eno Oyo' KAGAKU DENCHI ZAIRYO KENKYUKAI MEETING KOEN YOSHISHU vol. 11, 08 June 2009, pages 59 - 60
- SHOHEI KANAMURA ET AL.: 'NaTFSI-CsTFSI-Kei Yoyuen no Bussei to Natrium Niji Denchi eno Oyo' THE ELECTROCHEMICAL SOCIETY OF JAPAN TAIKAI KOEN YOSHISHU vol. 74, 29 March 2007, page 288, XP008158027
- TATSUYA ISHIBASHI ET AL.: 'NaTFSI-CsTFSI Nigenkei Yoyuen no Bussei to Natrium Niji Denchi eno Oyo' BATTERY SYMPOSIUM IN JAPAN KOEN YOSHISHU vol. 49, 05 November 2008, page 250, XP008149828
- SHOHEI KANAMURA ET AL.: 'NaTFSI-CsTFSI-Kei Yoyuen no Bussei to Natrium Niji Denchi eno Oyo(II)' KAGAKU DENCHI ZAIRYO KENKYUKAI MEETING KOEN YOSHISHU vol. 9, 11 June 2007, pages 59 - 60, XP008149829
- SHOHEI KANAMURA ET AL.: 'Kongo Alkali Kinzoku Imide-en no Bussei to Natrium Niji Denchi eno Oyo' YOYUEN KAGAKU TORONKAI YOSHISHU vol. 39, 29 November 2007, pages 5 - 6, XP008158026
- SHOHEI KANAMURA ET AL.: 'Kongo Yoyu MTFSI-en (M=Na,K,Cs) no Bussei to Na/S Denchi eno Oyo' YOYUEN KAGAKU TORONKAI YOSHISHU vol. 38, 28 November 2006, pages 15 - 16, XP008158025

## Description

### TECHNICAL FIELD

The present invention relates to a battery and an energy system.

### BACKGROUND ART

Leveling in electric power demands that vary between day and night or vary depending on the season (load leveling) has recently been desired and a sodium-sulfur battery has increasingly been used as electric energy charge and discharge means.

For example, according to Patent Document 1, a sodium-sulfur battery is a secondary battery in which molten sodium metal representing a negative-electrode active material and molten sulfur representing a positive-electrode active material are separated from each other by a β-alumina solid electrolyte having selective permeability with respect to sodium ions, and it has such excellent characteristics as having energy density higher than other secondary batteries, realizing compact facilities, hardly likely to cause self-discharge, and achieving high battery efficiency and facilitated maintenance (see paragraph [0002] of Patent Document 1).

In addition, according to Patent Document 1, cells (electric cells) of the sodium-sulfur batteries are connected in series to form a string, such strings are connected in parallel to form a module, and such modules are connected in series to form a module row. Arrangement of such modules rows in parallel as a whole is used as a main component of an electric power storage system connected to an electric power system or the like with an AC/DC converter and a transformer (see paragraph [0003] of Japanese Patent Laying-Open No. 2007-273297 (Patent Document 1)).

Kubota K. et al, "Novel inorganic ionic liquids possessing low melting temperatures and wide electrochemical windows: Binary mixtures of alkali bis(fluorosulfonyl)amides", Electrochemistry Communications 10, 7 October 2008, pages 1886-1888 (XP25679958) discloses binary mixtures of alkali bis(fluorosulfonyl) amides as electrolytes for sodium batteries comprising S or NiCl₂ as the positive electrode active material.

Ishibashi T. et al, "Sodium secondary batteries operating at intermediate temperature using binary molten NaTFSA-CsTFSA", The Electrochemical Society of Japan , 29 March 2009, vol. 76, page 377 (XP008150085) discloses a sodium battery comprising bis(trifluoromethnylsulfonyl)amide) mixtures as molten electrolyte.

Ishibashi et al, "Physicochemical properties of binary molten NaTFSA/CsTFSA and and application to Na/NacrO2 battery", Kagaku Denshi Zairyo Kenkyukai Meeting Koen Yoshishu, 8 June 2009, vol. 11, pages 59-60 (XP008158031) discloses a sodium battery comprising NaCrO₂ in the positive electrode and NaTFSA/CsTFSA as molten electrolyte.

### PRIOR ART DOCUMENTS

### PATENT DOCUMENTS

Patent Document 1: Japanese Patent Laying-Open No. 2007-273297

### SUMMARY OF THE INVENTION

### PROBLEMS TO BE SOLVED BY THE INVENTION

The sodium-sulfur battery, however, should normally be operated at a high temperature from 280 to 360°C (see paragraph [0004] of Patent Document 1).

Therefore, as described above, if arrangement of the sodium-sulfur battery module rows in parallel as a whole is used as the main component of the electric power storage system of a large-scale energy system, it takes several days to increase a temperature of the sodium-sulfur battery to the high operating temperature above and hence it takes an immense time until the electric power storage system is driven.

Meanwhile, a lithium ion secondary battery is also famous as a secondary battery high in energy density and low in operating temperature. As well known, however, the lithium ion secondary battery contains a liquid of a combustible organic compound as an electrolytic solution and hence it is low in safety and there is a problem also of lithium resources.

In view of the circumstances above, an object of the present invention is to provide a battery achieving high safety and high energy density, operable at a low temperature, and containing sodium abundant in resources, as well as an energy system including the battery.

### MEANS FOR SOLVING THE PROBLEMS

The present invention is directed to a battery according to claim 1 including a positive electrode, a negative electrode mainly composed of sodium, and an electrolyte provided between the positive electrode and the negative electrode, the electrolyte is molten salt containing anions expressed with chemical formula (I) below and cations of metal, 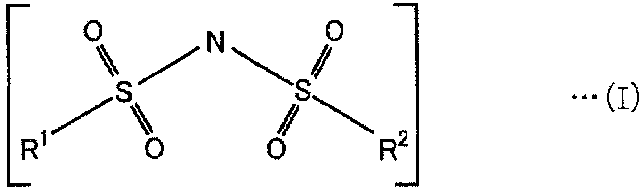 R¹ and R² in the chemical formula (I), R¹ and R² both representing fluorine atom or R¹ representing fluorine atom and R2 representing fluoroalkyl group, and the cations of metal contain at least one of at least one type of cations of alkali metal and at least one type of cations of alkaline-earth metal.

Here, in the battery according to the present invention, the positive electrode contains a metal compound selected from at least one of NaCrO₂, TiS₂ and FeF₃.

In addition, in the battery according to the present invention, the positive electrode preferably further contains a conductive additive.

In addition, in the battery according to the present invention, the positive electrode preferably further contains a binder.

In addition, in the battery according to the present invention, the cations of metal are preferably potassium ions and/or sodium ions.

In addition, the present invention is directed to an energy system including an electric energy generation apparatus for generating electric energy, a secondary battery capable of being charged with the electric energy generated by the electric energy generation apparatus and capable of discharging the charged electric energy, and a line for electrically connecting the electric energy generation apparatus and the secondary battery to each other, the secondary battery being according to claim 1.

### EFFECTS OF THE INVENTION

According to the present invention, a battery achieving high safety and high energy density, operable at a low temperature, and containing sodium abundant in resources, as well as an energy system including the battery can be provided.

### BRIEF DESCRIPTION OF THE DRAWINGS

Fig. 1 is a schematic diagram of a structure of a battery in an embodiment.
Fig. 2 is a schematic diagram of a structure of an energy system in the embodiment.
Fig. 3 is a schematic diagram of charge and discharge curves for illustrating a charge start voltage, a discharge start voltage and a discharge capacity, respectively.

### MODES FOR CARRYING OUT THE INVENTION

An embodiment of the present invention will be described hereinafter. In the drawings of the present invention, the same or corresponding elements have the same reference characters allotted.

### <Battery>

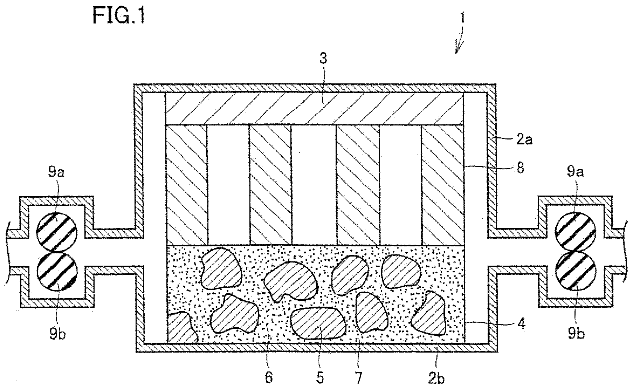

Fig. 1 shows a schematic structure of a battery in an embodiment representing one exemplary battery according to the present invention. Here, a battery 1 in the present embodiment includes a lower pan 2b made, for example, of a conductive material such as a metal, a positive electrode 4 provided on lower pan 2b, a separator 8 made, for example, of glass mesh and provided on positive electrode 4, a negative electrode 3 made of a conductive material mainly composed of sodium (the content of sodium being not lower than 50 mass %) and provided on separator 8, and an upper lid 2a made, for example, of a conductive material such as a metal and provided on negative electrode 3.

While lower pan 2b is covered with upper lid 2a, for example, upper lid 2a and lower pan 2b are fixed by a fixing member (not shown) such as a bolt and a nut.

In addition, an electrically insulating sealing material 9a such as an O-ring is provided around a peripheral portion of upper lid 2a, and an electrically insulating sealing material 9b such as an O-ring is also provided around a peripheral portion of lower pan 2b. Thus, a space between upper lid 2a and lower pan 2b is hermetically sealed and upper lid 2a and lower pan 2b are electrically isolated from each other.

It is noted that a current collector electrically connected to upper lid 2a may be provided in an upper portion of upper lid 2a, and a current collector electrically connected to lower pan 2b may be provided in a lower portion of lower pan 2b.

Here, separator 8 is immersed in an electrolyte composed of molten salt containing anions expressed in the chemical formula (I) below and cations of metal, and the electrolyte composed of the molten salt is in contact with both of negative electrode 3 and positive electrode 4.

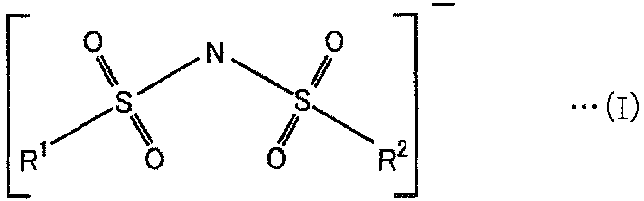

Here, in the chemical formula (I) above, R¹ and R² independently represent fluorine atom or fluoroalkyl group. R¹ and R² may represent the same substance or may represent different substances respectively.

Examples of anions expressed in chemical formula (I) above include such anions that R¹ and R² in chemical formula (I) above both represent fluorine atoms (F), and such anions that R¹ represents fluorine atom (F) and R² represents trifluoromethyl group (CF₃).

Examples of the molten salt contained in the electrolyte include molten salt containing anions expressed with the chemical formula (I) above and at least one of at least one type of cations of alkali metal and at least one type of cations of alkaline-earth metal.

The present inventors have found as a result of dedicated studies that the molten salt above has a low melting point and use of such molten salt for an electrolyte for the battery can lead to significant lowering in an operating temperature of the battery as compared with 280 to 360°C of a sodium-sulfur battery.

In addition, if the molten salt above is used for the electrolyte for the battery, owing to incombustibility of the molten salt, a battery achieving high safety and high energy density can be obtained.

Here, from a point of view of operating battery 1 at a lower temperature, such anions expressed in the chemical formula (I) above that R¹ and R² both represent F, that is, bis(fluorosulfonyl)imide ions (FSI⁻; hereinafter may also be referred to as "FSI ions"), and/or R¹ and R² both represent CF₃, that is, bis(trifluoromethylsulfonyl)imide ions (TFSI⁻; hereinafter may also be referred to as "TFSI ions"), are preferably used.

Therefore, from a point of view of operating battery 1 at a lower temperature, as the molten salt to be used for the electrolyte, simple salt of molten salt MFSI, a mixture of two or more types of simple salt of molten salt MFSI, or a mixture of one or more type of simple salt of molten salt MFSI and one or more type of simple salt of molten salt MTFSI, that contains FSI ions and/or TFSI ions as anions and contains ions of M representing any one type of alkali metal and alkaline-earth metal as cations is used.

In particular, since the mixture of simple salt of molten salt MFSI, and the mixture of one or more type of simple salt of molten salt MFSI and one or more type of simple salt of molten salt MTFSI are composed of two or more types of simple salt of the molten salt, they are further preferred in that a melting point can remarkably be lower than the melting point of the simple salt of the molten salt and hence an operating temperature of battery 1 can remarkably be lowered.

Strictly speaking, it is inappropriate to refer to FSI ions and TFSI ions without imino group as imide, however, they have already widely been referred to as such these days and hence such names are also used herein as trivial names.

Meanwhile, at least one type selected from the group consisting of lithium (Li), sodium (Na), potassium (K), rubidium (Rb), and cesium (Cs) may be used as the alkali metal.

In addition, at least one type selected from the group consisting of beryllium (Be), Mg (magnesium), calcium (Ca), strontium (Sr), and barium (Ba) may be used as the alkaline-earth metal.

Therefore, any one type of simple salt selected from the group consisting of LiFSI, NaFSI, KFSI, RbFSI, CsFSI, Be(FSI)₂, Mg(FSI)₂, Ca(FSI)₂, Sr(FSI)₂, and Ba(FSI)₂ may be used as the simple salt of molten salt MFSI.

In addition, any one type of simple salt selected from the group consisting of LiTFSI, NaTFSI, KTFSI, RbTFSI, CsTFSI, Be(TFSI)₂, Mg(TFSI)₂, Ca(TFSI)₂, Sr(TFSI)₂, and Ba(TFSI)₂ may be used as the simple salt of molten salt MTFSI.

Moreover, a mixture of two or more types of simple salt selected from the group consisting of LiFSI, NaFSI, KFSI, RbFSI, CsFSI, Be(FSI)₂, Mg(FSI)₂, Ca(FSI)₂, Sr(FSI)₂, and Ba(FSI)₂ may be used as the mixture of the simple salt of molten salt MFSI.

Further, a mixture of two or more types of simple salt selected from the group consisting of LiTFSI, NaTFSI, KTFSI, RbTFSI, CsTFSI, Be(TFSI)₂, Mg(TFSI)₂, Ca(TFSI)₂, Sr(TFSI)₂, and Ba(TFSI)₂ may be used as the mixture of the simple salt of molten salt MTFSI.

Furthermore, a mixture of one or more type of simple salt selected from the group consisting of LiFSI, NaFSI, KFSI, RbFSI, CsFSI, Be(FSI)₂, Mg(FSI)₂, Ca(FSI)₂, Sr(FSI)₂, and Ba(FSI)₂ and one or more type of simple salt selected from the group consisting of LiTFSI, NaTFSI, KTFSI, RbTFSI, CsTFSI, Be(TFSI)₂, Mg(TFSI)₂, Ca(TFSI)₂, Sr(TFSI)₂, and Ba(TFSI)₂ may be used as the mixture of one or more type of the simple salt of molten salt MFSI and one or more type of the simple salt of molten salt MTFSI.

Among others, from a point of view of lowering in an operating temperature of the battery, binary-system molten salt composed of a mixture of NaFSI and KFSI (hereinafter referred to as "NaFSI-KFSI molten salt") or binary-system molten salt composed of a mixture of NaFSI and NaTFSI (hereinafter referred to as "NaFSI-NaTFSI molten salt") is preferably used for the electrolyte.

In particular, a mole ratio between Na cations and K cations ((the number of moles of K cations)/(the number of moles of Na cations + the number of moles of K cations)) in the NaFSI-KFSI molten salt is preferably not smaller than 0.4 and not larger than 0.7, and more preferably not smaller than 0.5 and not larger than 0.6. When the mole ratio between Na cations and K cations ((the number of moles of K cations)/(the number of moles of Na cations + the number of moles of K cations)) in the NaFSI-KFSI molten salt is not smaller than 0.4 and not larger than 0.7, in particular not smaller than 0.5 and not larger than 0.6, it is likely that the operating temperature of the battery can be as low as 90°C or less.

When molten salt composed of the mixture of the simple salt of the molten salt above is used for the electrolyte of the battery, from a point of view of a lower operating temperature of the battery, the molten salt preferably has a composition close to such a composition that two or more types of molten salt exhibit eutectic (eutectic composition), and the molten salt most preferably has a eutectic composition.

In addition, organic cations may be contained in the electrolyte composed of the molten salt above. In this case, it is likely that the electrolyte can have high conductivity and the operating temperature of the battery can be low.

Here, for example, alkyl imidazole-type cations such as 1-ethyl-3-methylimidazolium cations, alkyl pyrrolidinium-type cations such as N-ethyl-N-methyl pyrrolidinium cations, alkylpyridinium-type cations such as 1-methyl-pyridinium cations, quaternary ammonium-type cations such as trimethylhexyl ammonium cations, and the like can be used as the organic cations.

In addition, as shown in Fig. 1, for example, an electrode structured such that a metal or a metal compound 5 and a conductive additive 6 are securely adhered to each other by a binder 7 may be used as positive electrode 4.

Here, for example, a a metal compound selected from the group consisting of NaCrO₂, TiS₂, is preferably used as the metal compound in the positive electrode (4).

Among others, NaCrO₂ is preferably used as the metal compound in the positive electrode (4). When NaCrO₂ is used as metal compound 5, it is likely that battery 1 achieving excellent charge and discharge cycle characteristics and high energy density can be obtained.

Meanwhile, an additive made of a conductive material can be used as conductive additive 6 without particularly limited, however, conductive acetylene black is preferably used among others. When conductive acetylene black is used as conductive additive 6, it is likely that battery 1 achieving excellent charge and discharge cycle characteristics and high energy density can be obtained.

In addition, the content of conductive additive 6 in positive electrode 4 is preferably not higher than 40 mass % of positive electrode 4, and more preferably not lower than 5 mass % and not higher than 20 mass %. When the content of conductive additive 6 in positive electrode 4 is not higher than 40 mass %, in particular not lower than 5 mass % and not higher than 20 mass %, it is more likely that battery 1 achieving excellent charge and discharge cycle characteristics and high energy density can be obtained. It is noted that conductive additive 6 does not necessarily have to be contained in positive electrode 4 if positive electrode 4 has conductivity.

Meanwhile, any binder capable of securely adhering metal or metal compound 5 and conductive additive 6 to each other can be used as binder 7 without particularly limited, however, polytetrafluoroethylene (PTFE) is preferably used among others. When polytetrafluoroethylene (PTFE) is used as binder 7, it is likely that metal compound 5 composed of NaCrO₂ and conductive additive 6 composed of acetylene black can more firmly be adhered to each other.

The content of binder 7 in positive electrode 4 is preferably not higher than 40 mass % of positive electrode 4, and more preferably not lower than 1 mass % and not higher than 10 mass %. When the content of binder 7 in positive electrode 4 is not higher than 40 mass %, in particular not lower than 1 mass % and not higher than 10 mass %, it is further likely that metal or metal compound 5 and conductive additive 6 can more firmly be adhered to each other while conductivity of positive electrode 4 is suitable. It is noted that binder 7 does not necessarily have to be contained in positive electrode 4.

Battery 1 structured as above can be used as a secondary battery capable of being charged and discharging through electrode reaction as shown in formulae (III) and (IV) below.

Negative electrode 3: Na^{→} ← Na⁺ + e⁻ (the right direction indicates discharge reaction and the left direction indicates charge reaction) ... (III)

Positive electrode 4: NaCrO₂^{→} ← xNa⁺ + xe⁻ + Na₁₋ₓCrO₂ (the right direction indicates charge reaction and the left direction indicates discharge reaction) ... (IV)

Alternatively, battery 1 can also be used as a primary battery.

Battery 1 serving as an electric cell has been described above, however, a plurality of batteries 1 that are electric cells may electrically be connected in series, to thereby form a string, and a plurality of such strings may electrically be connected in parallel, to thereby form a module.

An electric cell of battery 1 structured as above as well as a string and a module of the electric cells can suitably be used, for example, as an electric energy charge and discharge apparatus in an energy system as will be described later.

### <Energy System>

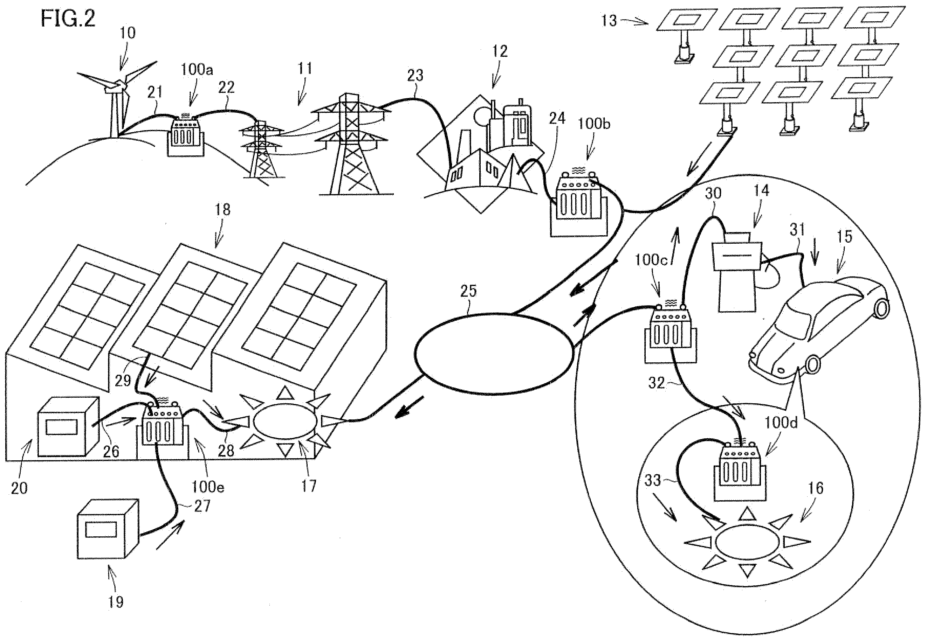

Fig. 2 shows a schematic structure of an energy system in the embodiment representing one exemplary energy system according to the present invention using battery 1 shown in Fig. 1.

Here, secondary batteries 100a, 100b, 100c, 100d, and 100e constituted of electric cells of batteries 1 above or strings or modules obtained by electrically connecting a plurality of the electric cells are each used as a charge and discharge apparatus of electric energy generated in an energy system according to the embodiment structured as shown in Fig. 2.

For example, electric energy generated in wind-power generation in a wind farm 10, which is a large-scale wind plant, is sent from wind farm 10 through a line 21 to secondary battery 100a, which is charged as it receives the electric energy.

Then, the electric energy charged in secondary battery 100a is discharged from secondary battery 100a and sent through a line 22 to a power line 11. Thereafter, the electric energy is sent from power line 11 through a line 23 to a substation 12, which sends the electric energy through a line 24 to secondary battery 100b. Secondary battery 100b is charged as it receives the electric energy sent from substation 12 through line 24.

Meanwhile, electric energy generated in photovoltaic power generation by a solar battery module 18 provided in a plant is sent through a line 29 to secondary battery 100e, which is charged as it receives the electric energy.

Meanwhile, electric energy generated by using a fuel gas, ammonia, VOC (a volatile organic compound), or the like in a gas power plant 20 provided in the plant and electric energy generated in fuel cell facilities 19 provided outside the plant are sent through respective lines 26 and 27 to secondary battery 100e, which is charged as it receives the electric energy.

Then, the electric energy charged in secondary battery 100e is discharged from secondary battery 100e through a line 28 and used as electric power 17 for operating the plant.

Meanwhile, electric energy charged in secondary battery 100b is discharged from secondary battery 100b through a line 25 and used as electric power 17 for operating the plant or sent through line 25 to secondary battery 100c, which is charged therewith.

Meanwhile, electric energy generated in photovoltaic power generation by mega solar facilities 13, which are large-scale photovoltaic power generation facilities, is sent through line 25 and used as electric power 17 for operating the plant or sent through line 25 to secondary battery 100c, which is charged therewith.

Meanwhile, electric energy charged in secondary battery 100c is discharged from secondary battery 100c through a line 30 to a power station 14, which is charged therewith. The electric energy charged in power station 14 is sent through a line 31 to a car 15 such as a hybrid car or an electric car and used as electric power for driving car 15.

Meanwhile, the electric energy charged in secondary battery 100c is discharged from secondary battery 100c and sent through a line 32 to secondary battery 100d within car 15, and secondary battery 100d is charged therewith. Then, the electric energy charged in secondary battery 100d is discharged from secondary battery 100d and used as electric power 16 for driving car 15.

In the energy system structured as shown in Fig. 2, secondary batteries 100a, 100b, 100c, 100d, and 100e constituted of electric cells, strings or modules of batteries 1 achieving high safety and high energy density and operable at a low temperature are each used as the electric energy charge and discharge apparatus.

Therefore, the energy system including these secondary batteries also achieves high safety and can generate a large amount of electric energy for efficient use thereof. In addition, since an immense time such as several days until the energy system is driven is not required, an energy system having excellent characteristics can be achieved.

In the energy system structured as shown in Fig. 2, at least one of lines 21, 22, 23, 24, 25, 26, 27, 28, 29, 30, 31, 32, and 33 is preferably implemented by a superconducting line capable of superconducting electric power transmission at a high temperature. In this case, since loss during transmission of electric energy can effectively be prevented, it is likely that generated electric energy can efficiently be used.

### EXAMPLES

### <Example 1>

### (i) Fabrication of Electrolyte

Initially, KFSI (manufactured by Daiichi Kogyo Seiyaku Co., Ltd.) and NaClO₄ (manufactured by Aldrich: purity 98%) were measured in a glove box filled with an argon atmosphere such that they are equal in moles, and thereafter each of KFSI and NaClO₄ was dissolved in acetonitrile and stirred for 30 minutes for mixing and reaction as shown in the following chemical equation (V).

KFSI + NaClO₄ → NaFSI + KClO₄ ... (V)

Then, KClO₄ precipitated in a solution after reaction above was removed through vacuum filtration, and thereafter the solution after removal of KClO₄ was introduced in a vacuum container made of Pyrex (trademark), that was evacuated for two days at 333K using a vacuum pump to remove acetonitrile.

Then, thionyl chloride was added to the substance obtained after removal of acetonitrile, which was stirred for three hours for reaction as shown in the following chemical equation (VI) in order to remove moisture.

H₂O + SOCl₂ → 2HCl + SO₂ ... (VI)

Thereafter, washing with dichloromethane was performed three times to remove thionyl chloride, and thereafter the substance obtained after removal of thionyl chloride was introduced in a PFA tube, which was evacuated for two days at 323K by using a vacuum pump in order to remove dichloromethane. Thus, white powdery NaFSI was obtained.

Then, NaFSI powders obtained as above and KFSI (manufactured by Daiichi Kogyo Seiyaku Co., Ltd.) powders were measured in a glove box filled with an argon atmosphere such that a mole ratio between NaFSI and KFSI was set to NaFSI:KFSI = 0.45:0.55, and mixed together to thereby fabricate a powder mixture. Thereafter, the powder mixture was heated to 57°C or higher, which is the melting point of the powder mixture, so as to melt the same, thus fabricating NaFSI-KFSI molten salt.

### (ii) Fabrication of Positive Electrode

Initially, Na₂CO₃ (manufactured by Wako Pure Chemical Industries, Ltd.) and Cr₂O₃ (manufactured by Wako Pure Chemical Industries, Ltd.) were mixed at a mole ratio of 1:1, and thereafter the mixture was formed in a pellet shape and fired for five hours at a temperature of 1223K in an argon stream, to thereby obtain NaCrO₂.

Then, NaCrO₂ obtained as above, acetylene black and PTFE were mixed and kneaded at a mass ratio of 80:15:5, and thereafter compression bonding thereof onto an Al mesh was performed to thereby fabricate a positive electrode.

### (iii) Fabrication of Battery

Initially, the positive electrode fabricated as above was set on the lower pan, with the Al mesh side of the positive electrode facing the lower pan made of Al.

Then, glass mesh was immersed in the NaFSI-KFSI molten salt fabricated as above in a glove box filled with an argon atmosphere, so as to set the glass mesh impregnated with the NaFSI-KFSI molten salt on the positive electrode.

Then, a negative electrode made of sodium metal was set on the glass mesh above, and the upper lid made of stainless was set on the negative electrode.

Thereafter, the bolt and the nut were used to fix the upper lid and the lower pan, to thereby fabricate the battery according to Example 1.

### (iv) Evaluation

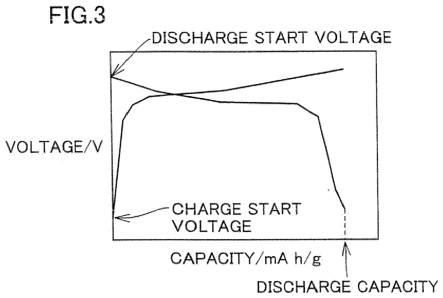

The battery according to Example 1 fabricated as above was subjected to charge and discharge tests of 10 cycles under such conditions as an operating temperature of 80°C, a charge start voltage of 2.5 V and a discharge start voltage of 3.5 V, and a discharge capacity after 10 cycles was measured. The results are as shown in Table 1. Fig. 3 schematically shows charge and discharge curves for illustrating a charge start voltage, a discharge start voltage and a discharge capacity, respectively.

As shown in Table 1, the discharge capacity of the battery according to Example 1 after 10 cycles was 74 (mA•h/g).

### <Example 2>

A battery according to Example 2 was fabricated as in Example 1 except that NaCrO₂ for the positive electrode was replaced with commercially available TiS₂.

The battery according to Example 2 was subjected to charge and discharge tests of 10 cycles under such conditions as an operating temperature of 80°C, a charge start voltage of 1.9 V and a discharge start voltage of 2.4 V, and a discharge capacity after 10 cycles was measured. The results are as shown in Table 1.

As shown in Table 1, the discharge capacity of the battery according to Example 2 after 10 cycles was 115 (mA•h/g).

### <Example 3>

A battery according to Example 3 was fabricated as in Example 1 except that NaCrO₂ for the positive electrode was replaced with commercially available FeF₃.

The battery according to Example 3 was subjected to charge and discharge tests of 10 cycles under such conditions as an operating temperature of 80°C, a charge start voltage of 2.7 V and a discharge start voltage of 4.1 V, and a discharge capacity after 10 cycles was measured. The results are as shown in Table 1.

As shown in Table 1, the discharge capacity of the battery according to Example 3 after 10 cycles was 125 (mA•h/g).

### <Example 4>

A battery according to Example 4 was fabricated as in Example 1 except that NaFSI-NaTFSI molten salt was fabricated by using NaTFSI powders instead of KFSI powders and the NaFSI-NaTFSI molten salt was employed instead of the NaFSI-KFSI molten salt. It is noted that a method of fabricating NaTFSI powders will be described later.

The battery according to Example 4 was subjected to charge and discharge tests of 10 cycles under such conditions as an operating temperature of 80°C, a charge start voltage of 2.5 V and a discharge start voltage of 3.5 V, and a discharge capacity after 10 cycles was measured. The results are as shown in Table 1.

As shown in Table 1, the discharge capacity of the battery according to Example 4 after 10 cycles was 76 (mA•h/g).

**Table 1**

| | Electrode | | | | | Charge and Discharge Test | | | |
|---|---|---|---|---|---|---|---|---|---|
| | Electrolyte (Molten Salt) | | | Positive Electrode | Negative Electrode | Operating Temperature | Charge Start Voltage (V) | Discharge Start Voltage (V) | Discharge Capacity (mA h/g) |
| | Material | Mole Ratio | Melting Point | Metal Compound | Material | | | | |
| Example 1 | NaFSI-KFSI Molten Salt | NaFSI:KFSI = 0.45:0.55 | 57°C | NaCrO₂ | Na | 80°C | 2.5 | 3.5 | 74 |
| Example 2 | NaFSI-KFSI Molten Salt | NaFSI:KFSI = 0.45:0.55 | 57°C | TiS₂ | Na | 80°C | 1.9 | 2.4 | 115 |
| Example 3 | NaFSI-KFSI Molten Salt | NaFSI:KFSI = 0.45:0.55 | 57°C | FeF₃ | Na | 80°C | 2.7 | 4.1 | 125 |
| Example 4 | NaFSI-NaTFSI Molten Salt | NaFSI:NaTFSI = 0.8:0.2 | 49°C | NaCrO₂ | Na | 80°C | 2.5 | 3.5 | 76 |

As shown in Table 1, it was confirmed that the batteries according to Examples 1 to 4 were batteries achieving high energy density at such a low operating temperature of 80°C.

In addition, the batteries according to Examples 1 to 4 achieved high safety, because incombustible NaFSI-KFSI molten salt or NaFSI-NaTFSI molten salt was used for the electrolyte.

### <Example 5> not according to the invention

### (i) Fabrication of Electrolyte

Initially, HTFSI (manufactured by Morita Chemical Industries Co., Ltd.: purity 99% or higher) and Na₂CO₃ (manufactured by Wako Pure Chemical Industries, Ltd.: purity 99.5%) were measured in a glove box filled with an argon atmosphere such that a mole ratio between HTFSI and Na₂CO₃ was set to HTFSI:Na₂CO₃ = 2:1, and thereafter each of HTFSI and Na₂CO₃ was dissolved in ethanol and stirred for 30 minutes for mixing and reaction as shown in the following chemical equation (VII).

2HTFSI + Na₂CO₃ → 2NaTFSI + CO₂ + H₂O ... (VII)

Then, ethanol was roughly removed by stirring this mixture for several hours by using a rotary evaporator. The resultant substance was introduced in a vacuum container made of Pyrex (trademark), that was evacuated for 24 hours at 353K, for 24 hours at 373K, and for 24 hours at 403K using a vacuum pump in order to remove ethanol for drying, thus obtaining white powdery NaTFSI.

Meanwhile, HTFSI (manufactured by Morita Chemical Industries Co., Ltd.: purity 99% or higher) and Cs₂CO₃ (manufactured by Aldrich: purity 99.9%) were measured in a glove box filled with an argon atmosphere such that a mole ratio between HTFSI and Cs₂CO₃ was set to HTFSI:Cs₂CO₃ = 2:1, and thereafter each of HTFSI and Cs₂CO₃ was dissolved in ethanol and stirred for 30 minutes for mixing and reaction as shown in the following chemical equation (VIII).

2HTFSI + Cs₂CO₃ → 2CsTFSI + CO₂ + H₂O .. (VIII)

Then, ethanol was roughly removed by stirring this mixture for several hours by using a rotary evaporator. The resultant substance was introduced in a vacuum container made of Pyrex (trademark), that was evacuated for 24 hours at 353K, for 24 hours at 373K, and for 24 hours at 403K using a vacuum pump in order to remove ethanol for drying, thus obtaining white powdery CsTFSI.

Then, NaTFSI powders and CsTFSI powders obtained as above were measured in a glove box filled with an argon atmosphere such that a mole ratio between NaTFSI and CsTFSI was set to NaTFSI:CsTFSI = 0.1:0.9, and mixed together to thereby fabricate a powder mixture. Thereafter, the powder mixture was heated to 110°C or higher, which is the melting point of the powder mixture, so as to melt the same, thus fabricating NaTFSI-CsTFSI molten salt.

### (ii) Fabrication of Positive Electrode

As in Example 1, NaCrO₂, acetylene black and PTFE were mixed and kneaded at a mass ratio of 80:15:5, and thereafter compression bonding thereof onto an Al mesh was performed to thereby fabricate a positive electrode.

### (iii) Fabrication of Battery

Initially, the positive electrode fabricated as above was set on the lower pan, with the Al mesh side of the positive electrode facing the lower pan made of Al.

Then, glass mesh was immersed in the NaTFSI-CsTFSI molten salt fabricated as above in a glove box filled with an argon atmosphere, to set the glass mesh impregnated with the NaTFSI-CsTFSI molten salt on the positive electrode.

Then, a negative electrode made of sodium metal was set on the glass mesh above, and the upper lid made of stainless was set on the negative electrode.

Thereafter, the bolt and the nut were used to fix the upper lid and the lower pan, to thereby fabricate the battery according to Example 5.

### (iv) Evaluation

The battery according to Example 5 fabricated as above was subjected to charge and discharge tests of 10 cycles under such conditions as an operating temperature of 150°C, a charge start voltage of 2.3 V and a discharge start voltage of 3.1 V, and a discharge capacity after 10 cycles was measured. The results are as shown in Table 2. Fig. 3 schematically shows charge and discharge curves for illustrating a charge start voltage, a discharge start voltage and a discharge capacity, respectively.

As shown in Table 2, the discharge capacity of the battery according to Example 5 after 10 cycles was 100 (mA•h/g).

### <Example 6> not according to the invention

A battery according to Example 6 was fabricated as in Example 5 except that NaCrO₂ for the positive electrode was replaced with commercially available TiS₂.

Then, the battery according to Example 6 was subjected to charge and discharge tests of 10 cycles under such conditions as an operating temperature of 150°C, a charge start voltage of 1.8 V and a discharge start voltage of 2.5 V, and a discharge capacity after 10 cycles was measured. The results are as shown in Table 2.

As shown in Table 2, the discharge capacity of the battery according to Example 6 after 10 cycles was 125 (mA•h/g).

### <Example 7> not according to the invention

A battery according to Example 7 was fabricated as in Example 5 except that NaCrO₂ for the positive electrode was replaced with commercially available FeF₃.

Then, the battery according to Example 7 was subjected to charge and discharge tests of 10 cycles under such conditions as an operating temperature of 150°C, a charge start voltage of 2.6 V and a discharge start voltage of 4.0 V, and a discharge capacity after 10 cycles was measured. The results are as shown in Table 2.

As shown in Table 2, the discharge capacity of the battery according to Example 7 after 10 cycles was 135 (mA•h/g).

**Table 2**

| | Electrode | | | | | Charge and Discharge Test | | | |
|---|---|---|---|---|---|---|---|---|---|
| | Electrolyte (Molten Salt) | | | Positive Electrode | Negative Electrode | Operating Temperature | Charge Start Voltage (V) | Discharge Start Voltage (V) | Discharge Capacity (mA h/g) |
| | Material | Mole Ratio | Melting Point | Metal Compound | Material | | | | |
| Example 5 | NaTFSI-CsTFSI Molten Salt | NaTFSI: CsTFSI = 0.1:0.9 | 110°C | NaCrO₂ | Na | 150°C | 2.3 | 3.1 | 100 |
| Example 6 | NaTFSI-CsTFSI Molten Salt | NaTFSI:CsTFSI = 0.1:0.9 | 110°C | TiS₂ | Na | 150°C | 1.8 | 2.5 | 125 |
| Example 7 | NaTFSI-CsTFSI Molten Salt | NaTFSI:CsTFSI = 0.1:0.9 | 110°C | FeF₃ | Na | 150°C | 2.6 | 4.0 | 135 |

As shown in Table 2, it was confirmed that the batteries according to Examples 5 to 7, which do not belong to the invention, were batteries achieving high energy density at such a low operating temperature of 150°C.

In addition, the batteries according to Examples 5 to 7 achieved high safety, because incombustible NaTFSI-CsTFSI molten salt was used for the electrolyte.

It should be understood that the embodiments and the examples disclosed herein are illustrative and non-restrictive in every respect. The scope of the present invention is defined by the terms of the claims, rather than the description above, and is intended to include any modifications within the scope and meaning of the claims.

### INDUSTRIAL APPLICABILITY

The present invention can be utilized in a battery and an energy system.

### DESCRIPTION OF THE REFERENCE SIGNS

1 battery; 2a upper lid; 2b lower pan; 3 negative electrode; 4 positive electrode; 5 metal or metal compound; 6 conductive additive; 7 binder; 8 separator; 9a, 9b sealing material; 10 wind farm; 11 power line; 12 substation; 13 mega solar facilities; 14 power station; 15 car; 16 electric power for driving; 17 electric power; 18 solar battery module; 19 fuel cell facilities; 20 gas power plant; 21, 22, 23, 24, 25, 26, 27, 28, 29, 30, 31, 32, 33 line; and 100a, 100b, 100c, 100d, 100e secondary battery.

## Claims

1. A battery (1), comprising:
a positive electrode (4) containing a metal compound selected from at least one of NaCrO₂, TiS₂, and FeF₃;
a negative electrode (3) mainly composed of sodium; and
an electrolyte provided between said positive electrode (4) and said negative electrode (3),
said electrolyte being molten salt containing anions expressed with chemical formula (I) below and cations of metal, 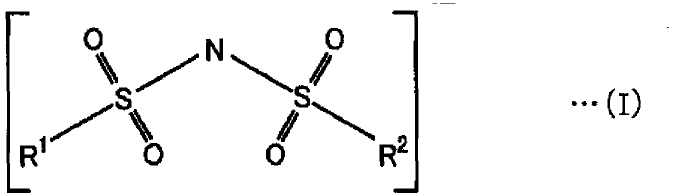 in said chemical formula (I), R¹ and R² both representing fluorine atom, or R¹ representing fluorine atom and R² representing fluoroalkyl group, and
said cations of metal containing at least one of at least one type of cations of alkali metal and at least one type of cations of alkaline-earth metal.

2. The battery (1) according to claim 1, wherein
said cations of metal are potassium ions and/or sodium ions.

3. An energy system, comprising:
an electric energy generation apparatus (10, 13, 18, 19, 20) for generating electric energy;
a secondary battery (1, 100a, 100b, 100c, 100d, 100e) capable of being charged with the electric energy generated by said electric energy generation apparatus (10, 13, 18, 19, 20) and capable of discharging the charged electric energy; and
a line (21, 22, 23, 24, 25, 26, 27, 28, 29, 30, 31, 32, 33) for electrically connecting said electric energy generation apparatus (10, 13, 18, 19, 20) and said secondary battery (1, 100a, 100b, 100c, 100d, 100e) to each other,
said secondary battery (1, 100a, 100b, 100c, 100d, 100e) being according to claim 1.

## Patentansprüche

1. Batterie (1), umfassend:
eine positive Elektrode (4), die eine Metallverbindung enthält, welche aus mindestens einem von NaCrO₂, TiS₂ und FeF₃ ausgewählt ist,
eine negative Elektrode (3), die hauptsächlich aus Natrium zusammengesetzt ist, und
einen Elektrolyten, der zwischen der positiven Elektrode (4) und der negativen Elektrode (3) bereitgestellt wird,
wobei der Elektrolyt geschmolzenes Salz ist, das Anionen, ausgedrückt mit der untenstehenden chemischen Formel (I), und Kationen von Metall enthält, 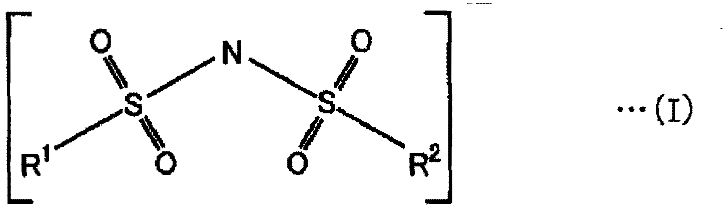 wobei in der chemischen Formel (I) R¹ und R² beide ein Fluoratom darstellen oder R¹ ein Fluoratom darstellt und R² eine Fluoralkylgruppe darstellt und die Metallkationen mindestens einen von mindestens einem Typ von Alkalimetallkationen und mindestens einen Typ von Erdalkalimetallkationen enthalten.

2. Batterie (1) gemäß Anspruch 1, wobei die Metallkationen Kaliumionen und/oder Natriumionen sind.

3. Energiesystem, umfassend:
eine Erzeugungsvorrichtung für elektrische Energie (10, 13, 18, 19, 20) zum Erzeugen elektrischer Energie,
eine Sekundärbatterie (1, 100a, 100b, 100c, 100d, 100e), die mit der elektrischen Energie, die von der Erzeugungsvorrichtung für elektrische Energie (10, 13, 18, 19, 20) erzeugt wurde, geladen werden kann und die geladene elektrische Energie entladen kann, und
eine Leitung (21, 22, 23, 24, 25, 26, 27, 28, 29, 30, 31, 32, 33) zur elektrischen Verbindung der Erzeugungsvorrichtung für elektrische Energie (10, 13, 18, 19, 20) und der Sekundärbatterie (1, 100a, 100b, 100c, 100d, 100e) miteinander,
wobei die Sekundärbatterie (1, 100a, 100b, 100c, 100d, 100e) gemäß Anspruch 1 ist.

## Revendications

1. Batterie (1), comprenant :
une électrode positive (4) contenant un composé métallique choisi parmi au moins l'un de NaCrO₂, TiS₂ et FeF₃ ;
une électrode négative (3) composée principalement de sodium ; et
un électrolyte disposé entre ladite électrode positive (4) et ladite électrode négative (3),
ledit électrolyte étant un sel fondu contenant des anions exprimés avec la formule chimique (I) ci-dessous et des cations de métal, 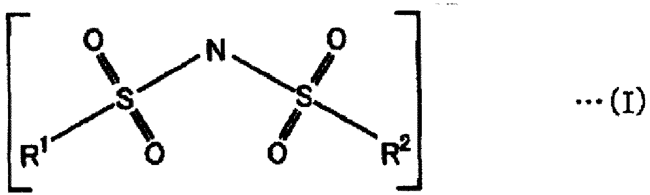
dans ladite formule chimique (I), R¹ et R² représentant l'un et l'autre un atome de fluor, ou R¹ représentant un atome de fluor et R² représentant un groupe fluoroalkyle, et
lesdits cations de métal contenant au moins l'un d'au moins un type de cations de métal alcalin et d'au moins un type de cations de métal alcalino-terreux.

2. Batterie (1) selon la revendication 1, où
lesdits cations de métal sont des ions potassium et/ou des ions sodium.

3. Système d'énergie, comprenant :
un appareil de production d'énergie électrique (10, 13, 18, 19, 20) pour produire de l'énergie électrique ;
une batterie secondaire (1, 100a, 100b, 100c, 100d, 100e) capable d'être chargée avec l'énergie électrique produite par ledit appareil de production d'énergie électrique (10, 13, 18, 19, 20) et capable de décharger l'énergie électrique chargée ; et
une ligne (21, 22, 23, 24, 25, 26, 27, 28, 29, 30, 31, 32, 33) pour relier électriquement ledit appareil de production d'énergie électrique (10, 13, 18, 19, 20) et ladite batterie secondaire (1, 100a, 100b, 100c, 100d, 100e) l'un à l'autre,
ladite batterie secondaire (1, 100a, 100b, 100c, 100d, 100e) étant selon la revendication 1.
